# DEMANDE DE BREVET EUROPEEN

(11) **EP 0 901 841 A1**
(43) Date de publication de la demande: **17.03.1999**
(21) Numéro de dépôt: 98401631.1
(22) Date de dépôt: 01.07.1998
(51) Int. Cl.: B08B 6/00

(54) **Procédé de nettoyage d'objets par essuyage rotatif et installation pour la mise en oeuvre du procédé**

(30) Priorité: 03.07.1997 FR 9708399
(71) Demandeur: AUTOMOBILES PEUGEOT, 75116 Paris (FR); AUTOMOBILES CITROEN, 92200 Neuilly-sur-Seine (FR); Simco, 7240 AB Lochem (NL)
(72) Inventeur: Dumont, Guy, 25200 Montbeliard (FR); Knoerr, Jean Pierre, 68240 Sigolsheim (FR); Spindler, Claude, 68000 Colmar (FR); Ten Tije, Gerrit Hendrik, 7478 AX Diepenheim (NL)
(74) Mandataire: Seytre, Françoise

(57) **Abrégé**

Procédé de nettoyage automatique d'objets 12 par essuyage au moyen d'au moins une brosse ou rouleau 10 rotatif tournant en sens contraire F2 du sens d'avancement F1 des objets 12.

Pour chaque rotation du rouleau, celui-ci est chargé électrostatiquement, en aval 14 de la zone I à essuyer de l'objet 12, dans le sens d'avancement dudit objet, d'une charge de polarité appropriée pour collecter les poussières et impuretés 16 contenues dans ladite zone. Le rouleau est ensuite déchargé électrostatiquement, en amont 18 de la zone I, de façon à restituer lesdites poussières et impuretés 16 à un dispositif de collecte et d'évacuation 20.

Application, notamment, à l'essuyage avant peinture des carrosseries de véhicule automobile.

## Description

L'invention concerne une installation pour le nettoyage avant peinture des carrosseries de véhicules automobiles. L'invention concerne aussi un procédé de nettoyage automatique d'objets par essuyage au moyen de brosses rotatives.

On connaît des installations de nettoyage d'objets, par exemple de carrosseries de véhicules automobiles qui sont amenés par un convoyeur à passer entre des brosses dont le sens de rotation est contraire au sens d'avancement des objets sur la ligne de convoyage. Le matériau composant les brosses possède, de préférence, une bonne aptitude à se charger en électricité statique par frottement au contact de l'objet. De ce fait, l'effet mécanique d'essuyage est renforcé par une attraction électrostatique des poussières et autres impuretés présentes à la surface de cet objet. La charge de la brosse est ensuite neutralisée au moyen d'une rampe antistatique produisant un champ électrique intense. Elle perd ainsi son pouvoir attractif de sorte que les impuretés qu'elle retenait peuvent être aspirées.

Ce procédé présente certains inconvénients. La charge *naturelle* de la brosse est relativement faible et dépend de la pression qu'elle exerce sur l'objet à nettoyer et de l'usure du matériau qui la compose. Si l'objet présente des zones anguleuses, l'action n'est pas parfaitement efficace.

La présente invention vise à éliminer ces inconvénients par renforcement de l'effet d'attraction des rouleaux d'essuyage au moyen de charges électrostatiques.

A cet effet, l'invention a pour premier objet une installation de nettoyage automatique d'objets comportant au moins une brosse ou rouleau rotatif tournant en sens contraire du sens d'avancement des objets qui comporte :
- une barre disposée en aval, par rapport au sens d'avancement de l'objet à essuyer, et parallèlement à l'axe dudit rouleau, ladite barre étant alimentée en courant continu sous haute tension de façon à créer un champ électrique intense unipolaire,
- une barre produisant un champ électrique bipolaire, disposée parallèlement à l'axe du rouleau, en amont de celui-ci, par rapport au sens d'avancement de l'objet, et
- un dispositif d'aspiration et d'évacuation des impuretés.
- un dispositif placé en amont de l'installation d'essuyage, dans le sens d'avancement de l'objet à essuyer, produisant à proximité dudit objet, un champ électrique très intense, de façon à générer un champ électrostatique bipolaire apte à neutraliser la charge électrostatique de la surface de l'objet et comportant des becs aptes à diffuser, en direction de l'objet, un flux d'air ionisé.

Selon d'autres caractéristiques et/ou variantes de l'invention :
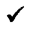 le dispositif est un portique en forme de U renversé.
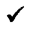 L'installation est formée d'un bâti comportant :
   - un portique d'entrée sur lequel est monté un dispositif de neutralisation de la charge statique de carrosseries de véhicule automobile amenées par un convoyeur,
   - un rouleau horizontal monté à la partie supérieure du bâti, deux rouleaux verticaux et deux rouleaux obliques montés latéralement sur ledit bâti, de façon à se trouver, respectivement, au-dessus et de part et d'autre du trajet des carrosseries
   - une barre de charge, une barre de décharge, et un dispositif d'aspiration et d'évacuation des impuretés associés à chacun des rouleaux d'essuyage.

L'invention concerne encore un procédé de nettoyage automatique d'objets par essuyage au moyen d'au moins une brosse ou rouleau rotatif tournant en sens contraire du sens d'avancement des objets. Le rouleau est chargé électrostatiquement, en aval de l'objet à essuyer, dans le sens d'avancement dudit objet, d'une charge de polarité appropriée pour collecter les poussières et impuretés présentes sur la surface de l'objet et déchargé électrostatiquement, en amont de celui-ci, de façon à restituer lesdites poussières et impuretés à un dispositif de collecte et d'évacuation.

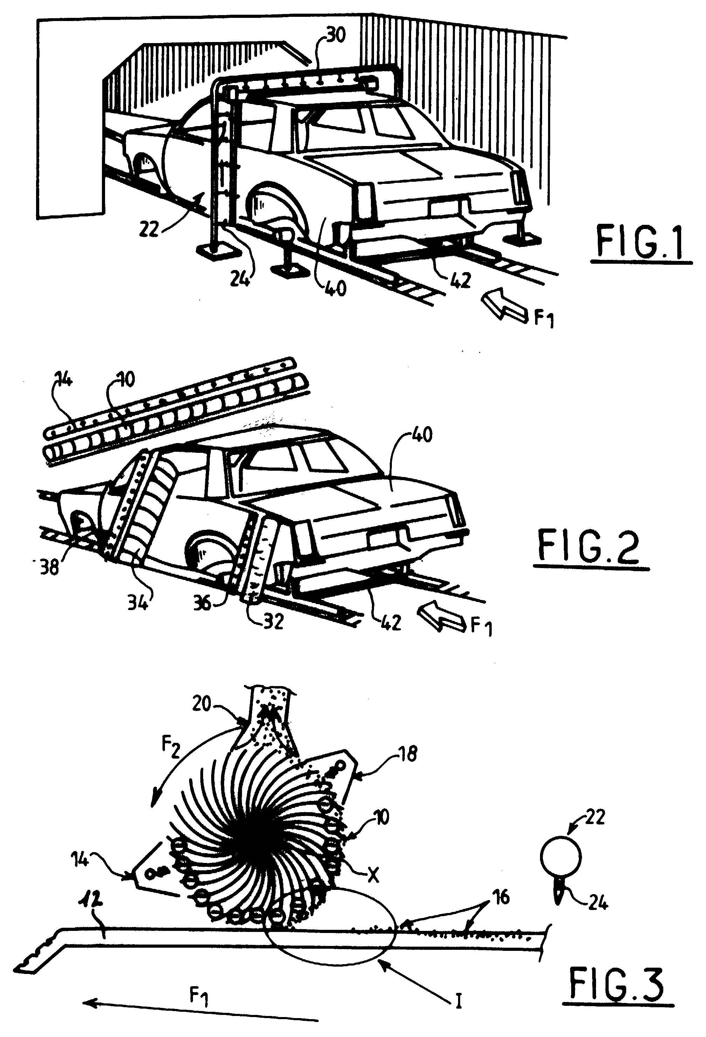

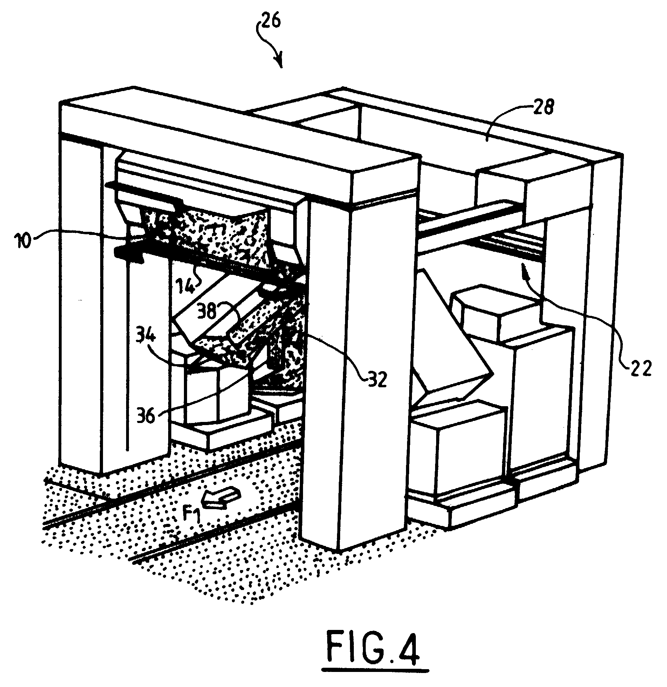

D'autres caractéristiques et avantages de l'invention apparaîtront à la lecture de la description détaillée qui va suivre, pour la compréhension de laquelle on se reportera aux dessins annexés, dans lesquels :
◆ La Figure 1 est une vue d'une installation montrant la première étape du procédé selon l'invention.
◆ La figure 2 est une vue d'une installation montrant la deuxième et la troisième étape du procédé selon l'invention.
◆ La figure 3 est une vue en coupe, au droit d'une brosse d'une installation selon l'invention et,
◆ La figure 4 est une vue d'une telle installation.

On va maintenant décrire le procédé appliqué au dépoussiérage, avant peinture, des carrosseries de véhicules automobiles. On sait que cette opération conditionne le bon aspect et la tenue de la peinture ultérieure. Elle doit donc être conduite très rigoureusement.

Pour ce faire, les carrosseries passent entre des rouleaux 10 garnis d'un matériau souple, par exemple de plumes d'autruche. La plume d'autruche, ou d'émeu, est très souple, elle ne raye donc pas et son bout arrondi rempli bien son rôle d'essuyage.

Comme on le voit sur la figure 3, si l'élément 12 de la carrosserie avance selon le sens représenté par la flèche F₁, le rouleau 10 tournera en sens inverse F2. En aval de la brosse 10, par rapport au sens d'avancement de l'élément 12, est disposée une barre 14 chargeante. Cette barre est alimentée en courant continu sous haute tension (entre 25 et 50 KV, par exemple) de façon à créer un champ électrique intense de polarité positive ou négative. Dans l'exemple représenté le champ est négatif. La barre 14 est placée parallèlement à l'axe X du rouleau à une distance de l'extrémité des plumes du rouleau suffisante pour éviter la formation d'arc électrique par conduction, sans entraîner de perte de charge.

Les plumes du rouleau 10 passant en regard de la barre 14 sont donc chargées négativement avant de venir au contact ou à proximité immédiate de l'élément 12, de sorte que toutes les poussières ou impuretés 16 se trouvant dans une zone I d'action du champ électrostatique sont attirées par les plumes.

On remarquera qu'il n'est donc plus nécessaire qu'il y est contact direct entre l'élément 12 à nettoyer et le rouleau 10, on peut ainsi éviter la production éventuelle de rayures dues au frottement du rouleau sur la surface de l'élément.

En poursuivant leur rotation, les plumes passent ensuite devant une barre 18 de décharge, analogue à la barre 14 mais produisant un champ bipolaire, c'est-à-dire comportant des ions négatifs et positifs, de façon à neutraliser la charge électrostatique des plumes. Les impuretés 16 ne sont plus retenues par les plumes et peuvent donc être aspirées au moyen d'un extracteur 20 qui assure en même temps leur évacuation.

Le fonctionnement du dispositif que l'on vient de décrire peut se faire selon deux modes différents.

Dans le premier mode, la barre de charge 14 et la barre de décharge 18 fonctionnent en même temps. C'est-à-dire qu'à chaque rotation du rouleau 10, ses plumes sont alternativement chargées et déchargées.

Dans le second mode de fonctionnement, la barre de charge 14 est mise en marche à l'arrivée d'un élément 12 sous le rouleau 10, tandis que la barre de décharge 18 est arrêtée. Lorsque l'élément 12 quitte la zone d'action du rouleau 10, la barre de charge 14 est arrêtée et la barre de décharge est mise en marche. Dans le cas de l'essuyage d'éléments important, comme une carrosserie de véhicule, ce mode de fonctionnement évite la chute accidentelle sur l'élément impuretés échappées du rouleau, au moment de leur aspiration.

Les processus que l'on vient de décrire permettent un essuyage tout à fait satisfaisant des objets traités. Toutefois, il est possible d'obtenir une amélioration sensible en ajoutant une étape supplémentaire. Cette étape consiste à neutraliser la charge de l'élément 12, avant son essuyage par le rouleau 10.

A cet effet, un dispositif 22 est disposé, en amont du rouleau 10, dans le sens d'avancement F₁ de l'élément 12. Ce dispositif 22 a un effet analogue aux barres de décharge 18, c'est-à-dire qu'il produit un champ électrique très intense, à proximité de l'élément 12 de façon à générer des ions positifs et négatifs. Ceux-ci attireront les ions de charge opposée présent sur la surface de l'élément 12 jusqu'au moment de son rééquilibrage et neutralisation finale.

De préférence, le dispositif 22 est du type à air ionisé. Il comporte, par exemple, des becs 24 qui diffusent, en direction de l'élément 12, un flux d'air ionisé. Alimentés en air comprimé et ionisé, leur action assure en même temps un dépoussiérage et la neutralisation des charges statiques.

Sur la figure 4 est représentée une installation permettant de mettre en oeuvre le processus que l'on vient de décrire. Cette installation est adaptée au dépoussiérage, avant peinture, des carrosseries de véhicule automobile.

L'installation est vue de l'arrière, dans le sens d'avancement F₁ des carrosseries. Elle est formée d'un bâti 26 comportant un portique d'entrée 28 sur lequel est monté le dispositif 22 de neutralisation de la charge statique des carrosseries. Comme on le voit mieux sur la figure 1, ce dispositif est formé d'une rampe en U renversé sur les trois branches de laquelle sont montés, régulièrement répartis, les becs 24 de soufflage de l'air comprimé ionisé.

Le bâti 26 porte ensuite, en partie supérieure, un rouleau 10 horizontal. Les carrosseries à nettoyer sont des objets tridimensionnels de forme irrégulière, de sorte qu'un seul rouleau horizontal n'est pas suffisant pour essuyer toute leur surface. Le bâti 26 porte donc encore deux rouleaux verticaux 32 et deux rouleaux obliques 34 montés de part et d'autre du trajet des carrosseries. A chacun des rouleaux est associée une barre de charge respectivement, 14, 36, 38, ainsi que, bien entendu une barre de décharge, et un dispositif d'aspiration et d'évacuation des impuretés, non représentés.

Le procédé de nettoyage d'une carrosserie 40 de véhicule automobile au moyen d'une telle installation est représenté sur les figures 1 et 2.

La carrosserie 40 est amenée par un convoyeur 42 qui avance dans le sens de la flèche F₁. Elle passe d'abord sous le portique formant l'installation de neutralisation 22, dont les becs 24 vont souffler sur elle de l'air ionisé, de façon à annuler sa charge statique en surface. En même temps, elle subit un premier dépoussiérage par l'air comprimé.

Elle s'engage ensuite entre les rouleaux verticaux 32, obliques 34 et le rouleau supérieur horizontal 10. Ces rouleaux tournent en sens inverse du sens d'avancement F₁ de la carrosserie et ils reçoivent, en aval de l'élément de carrosserie à essuyer, une charge statique générée par les barres 14, 36 et 38, de façon à attirer les poussières et autres impuretés présentes à la surface de la carrosserie, dans leur champ d'action.

De manière non représentée sur les figures 1 et 2, mais que l'on a expliquée précédemment, la charge des rouleaux est annulée avant l'aspiration des impuretés récupérées.

En variante non représentée, on installe en aval du rouleau 10, dans le sens d'avancement F₁ de l'élément 12, un dispositif de décharge analogue au dispositif 22 installé en amont. Ce dispositif assurera le rééquilibrage et la neutralisation finale de l'élément 12 de façon à empêcher un nouveau dépôt d'impureté.

Bien que l'invention ait été décrite en liaison avec un mode de réalisation particulier, il est bien évident qu'elle n'y est nullement limitée et qu'elle comprend tous les équivalents techniques des moyens décrits ainsi que leurs combinaisons si ceux-ci entrent dans le cadre du procédé selon l'invention.

C'est ainsi, par exemple, que les rouleaux d'essuyages peuvent être formés de tout matériau ayant les qualités requises pour l'usage évoqué, c'est-à-dire suffisamment souple pour épouser les formes de l'objet à nettoyer, non agressif pour la surface dudit objet et possédant une bonne capacité à se charger électrostatiquement.

Il est bien évident, également, que le nombre, et la position des rouleaux d'essuyage dépend de la forme et des dimensions de l'objet à essuyer.

## Revendications

1. Installation de nettoyage automatique d'objets (12, 40) comportant au moins une brosse ou rouleau (10, 32, 34) rotatif tournant en sens contraire (F2) du sens d'avancement (F1) des objets (12, 40),
caractérisée en ce qu'elle comporte :
- une barre (14) disposée en aval, par rapport au sens d'avancement de l'objet (12, 40) à essuyer, et parallèlement à l'axe (X) dudit rouleau (10, 32, 34), ladite barre étant alimentée en courant continu sous haute tension de façon à créer un champ électrique intense unipolaire,
- une barre (18) produisant un champ électrique bipolaire, disposée parallèlement à l'axe (X) du rouleau, en amont de celui-ci, par rapport au sens d'avancement de l'objet (12, 40), et
- un dispositif (20) d'aspiration et d'évacuation des impuretés.
- un dispositif (22) placé en amont de l'installation d'essuyage, dans le sens d'avancement (F1) de l'objet (12, 40) à essuyer, produisant à proximité dudit objet, un champ électrique très intense, de façon à générer un champ électrostatique bipolaire apte à neutraliser la charge électrostatique de la surface de l'objet (12, 40) et comportant des becs (24) aptes à diffuser, en direction de l'objet (12, 40), un flux d'air ionisé.

2. Installation selon la revendication 1,
caractérisé en ce que le dispositif (22) est un portique en forme de U renversé.

3. Installation selon la revendication 2,
caractérisé en ce qu'elle est formée d'un bâti (26) comportant :
- un portique d'entrée (28) sur lequel est monté un dispositif (22) de neutralisation de la charge statique de carrosseries (40) de véhicule automobile amenées par un convoyeur (42),
- un rouleau (10) horizontal monté à la partie supérieure du bâti (26), deux rouleaux verticaux (32) et deux rouleaux obliques (34) montés latéralement sur ledit bâti, de façon à se trouver, respectivement, au-dessus et de part et d'autre du trajet des carrosseries
- une barre de charge (14, 36, 38) une barre de décharge, et un dispositif d'aspiration et d'évacuation des impuretés associés à chacun des rouleaux (10, 32, 34) d'essuyage.

4. Procédé de nettoyage automatique d'objets (12, 40) par essuyage au moyen d'au moins une brosse ou rouleau (10, 32, 34) rotatif tournant en sens contraire (F2) du sens d'avancement (F1) des objets (12, 40),
caractérisé en ce que le rouleau (10, 32,34) est chargé électrostatiquement, en aval de l'objet (12, 40) à essuyer, dans le sens (F1) d'avancement dudit objet, d'une charge de polarité appropriée pour collecter les poussières et impuretés présentes sur la surface de l'objet (12, 40) et déchargé électrostatiquement, en amont de celui-ci, de façon à restituer lesdites poussières et impuretés à un dispositif de collecte et d'évacuation (20).
